# EUROPÄISCHE PATENTANMELDUNG

(11) **EP 2 738 501 A2**
(43) Veröffentlichungstag der Anmeldung: **04.06.2014**
(21) Anmeldenummer: 13005486.9
(22) Anmeldetag: 25.11.2013
(51) Int. Cl.: F26B 23/00

(54) **Verfahren und Vorrichtung zum Temperieren von Gegenständen**

(30) Priorität: 30.11.2012 DE 102012023457
(71) Anmelder: Eisenmann AG, 71032 Böblingen (DE)
(72) Erfinder: Katefidis, Apostolos, D-71116 Gärtringen (DE)
(74) Vertreter: Heinrich, Hanjo

(57) **Zusammenfassung**

Bei einem Verfahren zum Temperieren von Gegenständen, insbesondere zum Trocknen von Gegenständen, werden die Gegenstände in einem Temperiertunnel (14) temperiert und Tunnelluft aus dem Temperiertunnel (14) über eine Abluftleitung (44) als Abluft abgeführt. Dem Temperiertunnel (14) wird außerdem Zuluft über eine Zuluftleitung (52) zugeführt. Es wird eine Wärmespeichereinrichtung (74) mit einem Wärmespeicher (56) verwendet, durch welchen in einer Speicherkonfiguration der Wärmespeichereinrichtung (74) Wärme von der Abluft aufgenommen und in einer Abgabekonfiguration Wärme an die Zuluft abgegeben wird. Außerdem ist eine Vorrichtung zum Temperieren von Gegenständen, insbesondere zum Trocknen von Gegenständen, angegeben mit einem Temperiertunnel (14) und einer Ablufteinrichtung (34, 38, 40), mittels welcher Tunnelluft aus dem Temperiertunnel (14) über eine Abluftleitung (44) als Abluft abführbar ist. Mittels einer Zulufteinrichtung (46, 52, 54) ist dem Temperiertunnel (14) außerdem Zuluft über eine Zuluftleitung (52) zuführbar. Es ist eine Wärmespeichereinrichtung (74) mit einem Wärmespeicher (56) vorhanden, durch welchen in einer Speicherkonfiguration Wärme von der Abluft aufnehmbar und in einer Abgabekonfiguration Wärme an die Zuluft abgebbar ist.

## Beschreibung

Die Erfindung betrifft ein Verfahren zum Temperieren von Gegenständen, insbesondere zum Trocknen von Gegenständen, bei welchem
a) die Gegenstände in einem Temperiertunnel temperiert werden;
b) Tunnelluft aus dem Temperiertunnel über eine Abluftleitung als Abluft abgeführt wird;
c) dem Temperiertunnel über eine Zuluftleitung Zuluft zugeführt wird.

Außerdem betrifft die Erfindung ein Vorrichtung zum Temperieren von Gegenständen, insbesondere zum Trocknen von Gegenständen, mit
a) einem Temperiertunnel;
b) einer Ablufteinrichtung, mittels welcher Tunnelluft aus dem Temperiertunnel über eine Abluftleitung als Abluft abführbar ist;
c) einer Zulufteinrichtung, mittels welcher dem Temperiertunnel über eine Zuluftleitung Zuluft zuführbar ist.

Wenn vorliegend von "Temperieren" eines Gegenstandes gesprochen wird, so ist hiermit die Herbeiführung einer bestimmten Temperatur des Gegenstandes gemeint, die dieser zunächst noch nicht besitzt. Es kann sich grundsätzlich um eine Temperaturerhöhung oder eine Temperaturverringerung handeln. Ein in der Automobilindustrie häufiger Fall des Temperierens, nämlich des Erwärmens, von Gegenständen ist der Vorgang des Trocknens der Beschichtung von Fahrzeugkarosserien oder von Karosserieteilen. Bei der Beschichtung kann es sich beispielsweise um einen Lack oder einen Klebstoff oder dergleichen handeln. Die nachfolgende Beschreibung der Erfindung im Detail erfolgt am Beispiel eines solchen Trockners.

Wenn vorliegend von "Trocknen" die Rede ist, so sind damit alle Vorgänge gemeint, bei denen die Beschichtung der Fahrzeugkarosserie, insbesondere ein Lack, zum Aushärten gebracht werden kann, sei dies nun durch Austreiben von Lösemitteln oder durch Vernetzung der Beschichtungssubstanz.

Beim Temperieren von Gegenständen oder von deren Teilen können im Temperiertunnel Verunreinigungen freigesetzt werden. Verunreinigungen können z.B. in Form von Lösemittel vorliegen, welches aus Oberflächenbeschichtungen der Gegenstände austreten kann, wenn diese in einem Trockner getrocknet werden. Da die Tunnelluft sich im Laufe der Zeit mit Lösemittel anreichert und ab einem gewissen Sättigungsgrad kein weiteres Lösemittel mehr aufnehmen kann, wird diese mit Lösemittel beladene Tunnelluft kontinuierlich aus dem Temperiertunnel entfernt und durch konditionierte Frischluft ersetzt, welche in diesem Fall die oben genannte Zuluft bildet.

Die mit Lösemittel beladene Tunnelluft ist warm und kann abgeführt werden, wobei sie in der Regel zuvor einer thermischen Nachverbrennung zugeführt wird, in welcher die Verunreinigungen verbrannt werden. Die so erhaltene gereinigte und heiße Abluft kann dann über Dach abgeführt werden.

In der Regel werden Trockner nicht im Dauerbetrieb gefahren, sondern arbeiten lediglich tagsüber. Ebenso kann es bei schwankenden Produktionszahlen zu einem diskontinuierlichen Betrieb eines Trockners kommen.

Der Temperiertunnel eines Trockners kühlt jedoch während jeder Stillstandszeit aus und muss jedes Mal wieder auf seine Betriebstemperatur gebracht werden, bevor der Trockner mit zu trocknenden Gegenständen beschickt werden kann. Dies erfolgt beispielsweise durch einen Gasbrenner, der die Tunnelluft erwärmt.

Hierdurch wird bei jedem Anfahren des Trockners Energie verbraucht, die beträchtlich zu den Betriebskosten des Trockners beiträgt.

Es ist daher Aufgabe der Erfindung, ein Verfahren und eine Vorrichtung der eingangs genannten Art zu schaffen, bei welchen die Energiebilanz verbessert ist.

Diese Aufgabe wird bei einem Verfahren der eingangs genannten Art dadurch gelöst, dass
d) eine Wärmespeichereinrichtung mit einem Wärmespeicher verwendet wird, durch welchen in einer Speicherkonfiguration der Wärmespeichereinrichtung Wärme von der Abluft aufgenommen und in einer Abgabekonfiguration Wärme an die Zuluft abgegeben wird.

Erfindungsgemäß wird also die Wärme der Abluft gespeichert und kann dann zu einem späteren Zeitpunkt genutzt werden, um die Zuluft zu temperieren. Hierdurch kann im Idealfall auf eine zusätzliche Heizeinrichtung verzichtet werden, um die Tunnelluft im Temperiertunnel beim Anfahren der Temperiervorrichtung auf Betriebstemperatur zu bringen. Hierdurch sind zum Anfahren der Temperiervorrichtung weniger Ressourcen nötig und die Energiebilanz der Vorrichtung ist besser. Es ist außerdem günstig, wenn die Abluft durch einen Frischluft-Wärmetauscher geleitet wird, wobei die Abluft in dem Frischluft-Wärmetauscher Frischluft erwärmt, die dem Temperiertunnel über die Zuluftleitung zugeführt wird. Hierdurch wird Energie im laufenden Betrieb der Temperiervorrichtung gespart, um die Frischluft zu konditionieren und auf die erforderliche Temperatur zu bringen.

Es ist besonders effektiv, wenn die Abluft durch den Frischluft-Wärmetauscher geleitet wird, bevor die Abluft zu dem Wärmespeicher strömt. So wird die Abluft zunächst für den laufenden Betriebs der Temperiervorrichtung genutzt, wobei die Restwärme der Abluft, die diese nach Durchströmen des Frischluft-Wärmetauschers noch hat, gespeichert wird und zu einem späteren Zeitpunkt zur Verfügung steht.

Für den gewünschten Effekt ist es vorteilhaft, wenn dem Wärmespeicher wahlweise Abluft aus der Abluftleitung und/oder Frischluft aus einer Frischluftquelle zugeführt wird.

Es ist günstig, wenn von dem Wärmespeicher kommende Luft wahlweise in die Zuluftleitung geleitet und/oder abgeführt wird. Beispielsweise kann die Abluft, die den Wärmespeicher durchströmt hat, abgeführt werden oder im Umluftbetrieb wieder zum Temperiertunnel geführt werden. In letzterem Fall muss weniger Frischluft in den Temperiertunnel geführt werden.

Die oben genannte Aufgabe wird bei einer Vorrichtung der eingangs genannten Art gelöst durch
d) eine Wärmespeichereinrichtung mit einem Wärmespeicher, durch welchen in einer Speicherkonfiguration Wärme von der Abluft aufnehmbar und in einer Abgabekonfiguration Wärme an die Zuluft abgebbar ist.

Die hierdurch und durch die nachfolgend beschriebenen Merkmale erzielten Vorteile entsprechen sinngemäß den oben zum Verfahren erörterten Vorteilen.

Dementsprechend ist es günstig, wenn ein Frischluft-Wärmetauscher vorhanden ist, durch welchen Abluft leitbar ist, wobei durch die Abluft in dem Frischluft-Wärmetauscher Frischluft erwärmbar ist, die dem Temperiertunnel über die Zuluftleitung zuführbar ist.

Vorteilhaft ist der Frischluft-Wärmetauscher in Strömungsrichtung der Abluft vor dem Wärmespeicher angeordnet.

Vorzugsweise ist eine Eingangs-Ventilanordnung vorhanden, durch welche eine Speicher-Eingangsleitung des Wärmespeichers wahlweise mit der Abluftleitung und/oder einer Frischluft-Zuführleitung verbindbar ist, die aus einer Frischluftquelle gespeist wird.

Ferner ist es günstig, wenn eine Ausgangs-Ventilanordnung vorhanden ist, durch welche eine Speicher-Ausgangsleitung des Wärmespeichers wahlweise mit der Zuluftleitung und/oder einer Abführleitung verbindbar ist, über welche von dem Wärmespeicher kommende Luft abgeführt werden kann.

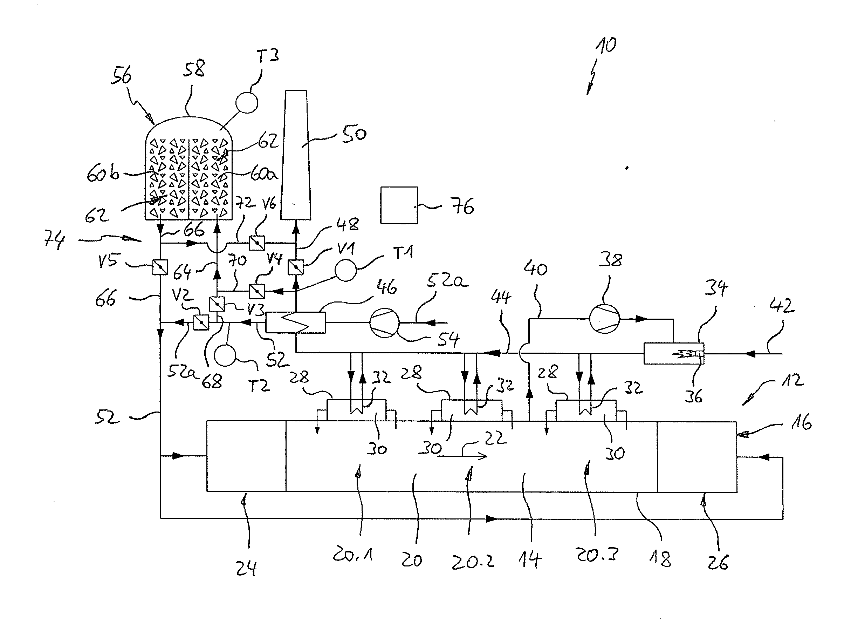

Ein Ausführungsbeispiel der Erfindung wird nachfolgend anhand der einzigen Figur erläutert. In dieser ist mit 10 insgesamt eine Anlage bezeichnet, in welcher nicht eigens gezeigte Gegenstände in verschiedenen Behandlungszonen behandelt werden. Die Anlage 10 umfasst eine Temperierzone mit einer Temperiervorrichtung 12, die einen Temperiertunnel 14 aufweist. In dem Temperiertunnel 14 kann eine Tunnelatmosphäre mit einer Betriebstemperatur erzeugt werden, die anders als die Umgebungstemperatur außerhalb des Temperiertunnels 14 ist.

Beim vorliegenden Ausführungsbeispiel ist die Temperiervorrichtung 12 als Trockner 16 ausgebildet, in dem beispielsweise Gegenstände getrocknet werden, die vorher in einer nicht eigens gezeigten Beschichtungszone lackiert wurden. Bei den Gegenständen kann es sich z.B. um Fahrzeugkarosserien oder um Teile von Fahrzeugkarosserien handeln; grundsätzlich kann das nachfolgend erläuterte Konzept jedoch für die Behandlung beliebiger Gegenstände angewandt werden.

Der Trockner 16 umfasst ein Gehäuse 18, in dem der Temperiertunnel 14 in Form eines Trockentunnels 20 untergebracht ist. Im Standardbetrieb des Trockners 18 werden die Gegenstände in dem Trockentunnel 20 in einer Tunnelatmosphäre behandelt, d.h. vorliegend getrocknet, die eine Temperatur hat, die höher als die Umgebungstemperatur außerhalb des Trockentunnels 20 ist.

Der Trockentunnel 20 umfasst mehrere hintereinander angeordnete Tunnelabschnitte, wobei beim vorliegenden Ausführungsbeispiel drei Tunnelabschnitte 20.1, 20.2 und 20.3 gezeigt sind. Der Trockentunnel 20 kann in an und für sich bekannter Weise jedoch auch nur einen einzigen oder zwei Tunnelabschnitte oder auch mehr als drei Tunnelabschnitte aufweisen.

Die Gegenstände werden mit einem nicht dargestellten Fördersystem in einer Förderrichtung 22 gefördert und gelangen zunächst in eine Eingangsschleuse 24 und von dort in den Trockentunnel 20. Die Gegenstände verlassen schließlich den Trockentunnel 20 durch eine Ausgangsschleuse 26 in getrocknetem Zustand, nachdem sie die Tunnelabschnitte 20.1, 20.2 und 20.3 durchfahren haben.

Jedem Tunnelabschnitt 20.1, 20.2, 20.3 ist ein Heizaggregat 28 zugeordnet. Tunnelluft aus einem Tunnelabschnitt 20.1, 20.2, 20.3 wird jeweils in einem Kreislauf 30 abgesaugt, durch das zugehörige Heizaggregat 28 geführt und von dort wieder in den Tunnelabschnitt 20.1, 20.2, 20.3 zurückgeblasen. Hierfür erforderliche Gebläse sind der Einfachheit halber nicht gezeigt.

In jedem Heizaggregat 28 ist im Kreislauf 30 der umgewälzten Tunnelluft ein Umwälzluft-Wärmetauscher 32 angeordnet, an dem die Tunnelluft durch ein heißes Primärgas erhitzt wird. Dieses heiße Primärgas stammt von einer thermischen Nachverbrennungseinrichtung 34 mit einem Brenner 36, in welcher mit Lösemittel beladene Prozessluft aus dem Trockentunnel 20 bzw. deren mitgeführte Lösemittel verbrannt werden. Hierzu wird kontinuierlich Prozessluft aus dem Trockentunnel 20 durch ein Prozessluft-Gebläse 38 über eine Prozessluftleitung 40 aus dem Trockentunnel 20 abgesaugt und zu der thermischen Nachverbrennungseinrichtung 34 geführt. Deren Brenner 36 wird in an und für sich bekannter Weise mit Brenngas und Brennerluft gespeist, was durch einen Versorgungsstrang 42 angedeutet ist, der die benötigten Versorgungsleitungen umfasst. Die thermische Nachverbrennungseinrichtung 34 und die Prozessluftleitung 40 mit dem Prozessluft-Gebläse 38 bilden so eine Ablufteinrichtung, mittels welcher Tunnelatmosphäre aus dem Trockentunnel 20 als Abluft abführbar ist. Statt der thermischen Nachverbrennungseinrichtung 34 kann auch eine regenerative Nachverbrennungseinrichtung vorhanden sein, wie sie an und für sich bekannt.

Die nun gereinigte Prozessluft verlässt als heiße Abluft die thermische Nachverbrennungseinrichtung 34 über eine Abluftleitung 44, aus der nun die Umwälzluft-Wärmetauscher 32 der Heizaggregate 28 mit der heißen Abluft gespeist werden, welche folglich das heiße Primärgas für die Heizaggregate 28 bildet. Wie in der Figur zu erkennen ist, wird die Abluft wieder in die Abluftleitung 44 zurückgeführt, nachdem sie den Umwälzluft-Wärmetauscher 32 durchströmt hat.

Die Abluftleitung 44 führt stromauf der Heizaggregate 28 zunächst durch einen Frischluft-Wärmetauscher 46, von wo die Abluft über eine Abführleitung in Form einer Kaminleitung 48 zu einem Kamin 50 strömt, über welchen Luft über Dach abgeführt werden kann. Die Kaminleitung 48 kann durch ein Ventil V1 geschlossen oder geöffnet werden.

Der Frischluft-Wärmetauscher 46 ist in einer Frischluftleitung 52a einer Zuluftleitung 52 angeordnet und erwärmt unbelastete Frischluft, die über die Zuluftleitung 52 aus einer als Frischluft-Gebläse 54 veranschaulichten Frischluftquelle über die Eingangsschleuse 24 und die Ausgangsschleuse 26 des Trockners 16 in den Trockentunnel 20 nachgeführt wird. Hierdurch ist eine Frischlufteinrichtung gebildet, mittels welcher dem Trockentunnel 20 Frischluft zuführbar ist. Auf diese Weise kann die zur thermischen Nachverbrennungseinrichtung 34 abgesaugte und mit Lösemittel beladene Prozessluft durch unbelastete und vorgewärmte Frischluft ersetzt werden, so dass die Tunnelatmosphäre stets Lösemittel von den zu trocknenden Gegenständen aufnehmen kann und keinen gesättigten Zustand erreicht. Stromab des Frischluft-Wärmetauschers 46 kann die Frischluftleitung 52a der Zuluftleitung 52 durch ein Ventil V2 geschlossen oder geöffnet werden. Die über die Eingangsschleuse 24 und die Ausgangsschleuse 26 in den Trockentunnel 20 einströmende Frischluft bildet zusammen mit der bereits im Trockentunnel 20 befindlichen Luft die Tunnelluft im Trockentunnel 20.

Der Trockner 16 umfasst außerdem einen Wärmespeicher 56, der beim vorliegenden Ausführungsbeispiel schematisch als isolierte Speicherglocke 58 gezeigt ist, die mehrere strömungstechnisch miteinander verbundene Speicherkammern aufweist, wobei vorliegend zwei Speicherkammern 60a, 60b gezeigt sind. Die Speicherkammern 60a, 60b sind jeweils mit einem Speichermaterial 62, wie zum Beispiel einer Keramikschüttung, gefüllt und verbinden eine Speicher-Eingangsleitung 64 mit einer Speicher-Ausgangsleitung 66 der Speicherglocke 58. Die Speicherglocke 58 kann auch mehr als zwei Speicherkammern 60a, 60b aufweisen, welche hintereinander durchströmt werden können.

Von der Zuluftleitung 52 zweigt zwischen dem Frischluft-Wärmetauscher 46 und dem Ventil V2 in der Frischluftleitung 52a eine Frischluft-Zuführleitung 68 zur Speicher-Eingangsleitung 64 der Speicherglocke 58 ab. Die Frischluft-Zuführleitung 68 kann durch ein Ventil V3 geschlossen oder geöffnet werden. Außerdem zweigt von der Kaminleitung 48 zwischen dem Frischluft-Wärmetauscher 46 und dem Ventil V1 eine Abluft-Zuführleitung 70 ab, die ebenfalls zur Speicher-Eingangsleitung 64 der Speicherglocke 58 führt und die durch ein Ventil V4 geschlossen oder geöffnet werden kann. Die Ventile V3 und V4 bilden eine Eingangs-Ventilanordnung, durch welche die Speicher-Eingangsleitung 64 des Wärmespeichers 5) wahlweise mit der Abluftleitung 44 und/oder der Frischluft-Zuführleitung 68 verbindbar ist, die über das Gebläse 54 gespeist wird. Der Frischluft-Wärmetauscher 46 ist somit in Strömungsrichtung der Abluft vor dem Wärmespeicher 56 angeordnet.

Die Speicher-Ausgangsleitung 66 der Speicherglocke 58 führt stromab des Ventils V2 zur Zuluftleitung 52 und kann ihrerseits mittels eines Ventils V5 geschlossen oder geöffnet werden. Zwischen dem Ventil V5 und der Speicherglocke 58 zweigt von der Speicher-Ausgangsleitung 66 eine Speicher-Abluftleitung 72 ab, die stromab des Ventils V1 in die Kaminleitung 48 mündet und durch ein Ventil V6 geschlossen oder geöffnet werden kann.

In der Kaminleitung 48 ist zwischen dem Frischluft-Wärmetauscher 46 und dem Ventil V1 ein Temperaturfühler T1 angeordnet, mittels welchem die Temperatur der den Frischluft-Wärmetauscher 46 verlassenden Abluft überwacht werden kann, die von der thermischen Nachverbrennungseinrichtung 34 stammt. Ein weiterer Temperaturfühler T2 ist zwischen dem Frischluft-Wärmetauscher 46 und dem Ventil V2 in der Zuluftleitung 52 vorhanden, so dass die Temperatur der im Frischluft-Wärmetauscher 46 erwärmten Frischluft überwacht werden kann. Schließlich ist ein dritter Temperaturfühler T3 im Wärmespeicher 56 vorgesehen, durch welchen die Temperatur der Luft erfasst werden kann, die durch den Wärmespeicher 56 hindurch strömt, und/oder durch welchen die Speichertemperatur des Wärmespeichers 56 überwacht werden kann.

Insgesamt ist so eine Wärmespeichereinrichtung 74 gebildet, durch welche in einer Speicherkonfiguration Wärme von der Abluft aufnehmbar und in einer Abgabekonfiguration Wärme an die Zuluft abgebbar ist. Zur Wärmespeichereinrichtung 74 gehören beim vorliegenden Ausführungsbeispiel insbesondere die Kaminleitung 48, der Wärmespeicher 56 in Form der Speicherglocke 58, die Speicher-Eingangsleitung 64, die Speicher-Ausgangsleitung 66, die Frischluft-Zuführleitung 68, die Abluft-Zuführleitung 70 und die Speicher-Abluftleitung 72.

Alle Steuer- und Regelvorgänge des Trockners 18 werden durch eine Steuereinheit 76 koordiniert, durch welche alle Ventile V1, V2, V3, V4, V5, V6, das Prozessluft-Gebläse 38, das Frischluft-Gebläse 54 sowie der Brenner 36 und dessen Gasund Brennluftversorgung angesteuert werden. Außerdem erhält die Steuereinheit 74 Ausgangssignale der Temperaturfühler T1, T2 und T3. Entsprechende Steuer- und Kommunikationsleitungen zwischen der Steuereinheit 74 und den genannten Komponenten sind der Übersichtlichkeit halber nicht gezeigt. Nachstehend wird nun erläutert, wie die Wärmespeichereinrichtung 74 für den Betrieb des Trockners 16 genutzt werden kann. Der eigentliche Trockenvorgang im Trockentunnel 20 läuft in an und für sich bekannter Art und Weise ab und ist nicht weiter von Interesse. Grundsätzlich wird der Volumenstrom des Prozessluft-Gebläses 38 und des Frischluft-Gebläses 54 dabei durch die Steuereinheit 76 eingestellt.

Die Wärmespeichereinrichtung 74 kann zunächst in drei Grundkonfigurationen betrieben werden, nämlich in einer Standard-Betriebskonfiguration, in einer Standard-Speicherkonfiguration und in einer Standard-Abgabekonfiguration. Daneben sind jedoch auch Misch-Konfigurationen möglich, worauf weiter unten nochmals eingegangen wird. Zunächst werden die drei Standardkonfigurationen erläutert:

In der Standard-Betriebskonfiguration der Wärmespeichereinrichtung 74 sind die Ventile V1 und V2 geöffnet und die Ventile V3, V4, V5 und V6 geschlossen.

In der Standard-Betriebskonfiguration wird die Abluft von der thermischen Nachverbrennungseinrichtung 34 direkt über die Kaminleitung 48 zum Kamin 50 und von dort abgeführt, nachdem sie im Frischluft-Wärmetauscher 46 genutzt wurde, um die Frischluft zu erwärmen, welche dann über die Zuluftleitung 52 zu der Eingangsschleuse 24 und zu der Ausgangsschleuse 26 des Trockners 16 gefördert wird. Die Zuluft besteht in diesem Fall vollständig aus Frischluft.

In der Standard-Speicherkonfiguration der Wärmespeichereinrichtung 74 sind die Ventile V2, V4 und V6 geöffnet und die Ventile V1, V3, V5 geschlossen.

Die Abluft von der thermischen Nachverbrennungseinrichtung 34 wird in diesem Fall stromauf des Frischluft-Wärmetauschers 46 über die Abluft-Zuführleitung 70 in die Speicher-Eingangsleitung 64 und auf diesem Weg zur Speicherglocke 58 geleitet. Die Abluft durchströmt die beiden Speicherkammern 60a, 60b und gibt dabei Wärme an das Speichermaterial 62 ab, wobei die Abluft abkühlt. Die abgekühlte Abluft strömt dann in die Speicher-Ausgangsleitung 66, von dort über die Speicher-Abluftleitung 72 zur Kaminleitung 48 und schließlich in den Kamin 50.

In der Standard-Abgabekonfiguration der Wärmespeichereinrichtung 74 sind die Ventile V1, V3, V5 geöffnet und die Ventile V2, V4 und V6 geschlossen.

Die Abluft von der thermischen Nachverbrennungseinrichtung 34 wird dann wieder direkt über die Kaminleitung 48 zum Kamin 50 und von dort abgeführt, nachdem sie den Frischluft-Wärmetauscher 46 durchströmt hat. Die Frischluft wird jedoch nach dem Frischluft-Wärmetauscher 46 zur Speicher-Eingangsleitung 64 und auf diesem Weg zur Speicherglocke 58 geleitet. Die Frischluft durchströmt die beiden Speicherkammern 60a, 60b und nimmt dabei Wärme von dem Speichermaterial 62 auf, wobei sich die Frischluft erwärmt. Die erwärmte Frischluft strömt dann in die Speicher-Ausgangsleitung 66 und von dort in die Zuluftleitung 52, über welche sie zu der Eingangsschleuse 24 und zu der Ausgangsschleuse 26 des Trockners 16 gefördert wird. Die in der Speicherglocke 58 erwärmte Frischluft gelangt dann in den Trockentunnel 20, wo sie zur Temperatur der dortigen Atmosphäre beiträgt.

Die Abgabekonfiguration der Wärmespeichereinrichtung 74 wird insbesondere zum Anfahren des Trockners 16 zu Beginn eines Betriebstages genutzt, nachdem der Trockner 16 sich in der Regel über Nacht abgekühlt hat. Auf diese Weise wird der eingangs erläuterte Anfahrvorgang des Trockners 16 verkürzt und hierfür benötigte Ressourcen, wie etwa Erdgas, gespart. In dem Frischluft-Wärmetauscher 46 wird die Frischluft in diesem Fall so lange nicht erwärmt, bis erwärmte Abluft zum Frischluft-Wärmetauscher 46 gelangt.

Aber auch nach unvorhergesehenen Stillstandszeiten oder gewollten Betriebspausen kann die in dem Wärmespeicher 56 gespeicherte Wärmeenergie zum Aufheizen des Frischluftstromes und dadurch zum Aufheizen der Tunnelluft genutzt werden.

Durch den Temperaturfühler T1, welcher die Temperatur der Abluft von der thermischen Nachverbrennungseinrichtung 34 aufnimmt, wird erfasst, wenn der Trockner 16 seine Betriebstemperatur erreicht hat. In diesem Fall wird die Wärmespeichereinrichtung 74 in die Standard-Betriebskonfiguration überführt, da die Frischluft dann in ausreichendem Maße mit Hilfe des Frischluft-Wärmetauschers 46 aufgeheizt wird, um die erforderliche Temperatur der Tunnelluft aufrechtzuerhalten.

Die Temperatur der Abluft kann schwanken. Die Steuereinheit 76 kann nun so eingestellt sein, dass die Wärmespeichereinrichtung 74 immer dann und in Echtzeit in die Speicherkonfiguration gebracht wird, wenn die Abluft eine verhältnismäßig hohe Temperatur hat. Auf diese Weise wird das Speichermaterial 62 auf ein höheres Temperaturniveau gebracht, als es bei einer tieferen mittleren Temperatur der Abluft möglich ist. Da dann in der Abgabekonfiguration der Wärmespeichereinrichtung 74 die Frischluft stärker und/oder schneller erwärmt wird, erfolgt auch das Anfahren des Trockners 16 auf dessen Betriebstemperatur schneller.

In oben angesprochenen Mischkonfigurationen können der Frischluftstrom und/oder der Abluftstrom auch in Teilströme auftrennt werden. Zum Beispiel können die Ventile V1, V2, V4 und V6 geöffnet und die Ventile V3 und V5 geschlossen sein. In diesem Fall wird der Abluftstrom in zwei Teilströme aufgetrennt, von denen einer direkt über den Kamin 50 abgeführt und der andere zunächst durch die Speicherglocke 58 und dann erst zum Kamin 50 geleitet wird. Durch letzteren Abluft-Teilstrom wird Wärme in der Speicherglocke 58 gespeichert.

Wenn die Abluft von der thermischen Nachverbrennungseinrichtung 34 eine besonders hohe Temperatur hat, wird auch die Frischluft im Frischluft-Wärmespeicher 46 effektiv und auf hohe Temperaturen erwärmt. Wenn diese Temperatur, die durch den Temperaturfühler T2 erfasst wird, höher ist, als es für die Aufrechterhaltung der Tunneltemperatur notwendig ist, kann beispielsweise das Ventil V3 geöffnet werden, um einen Teilstrom der Frischluft durch den Wärmespeicher 56 zu führen. Wahlweise kann dieser abgezweigte Frischluftstrom dann bei geöffnetem Ventil V5 und geschlossenem Ventil V6 wieder in die Zuluftleitung 52 zurückgeführt werden oder bei geschlossenem Ventil V5 und geöffnetem Ventil V6 über den Kamin 50 abgeführt werden.

Auch kann beispielsweise ein Teil der gereinigten Abluft wieder in einem Kreislauf über die Zuluftleitung 52 zum Trockentunnel 20 zurückgeführt werden. Hierzu wird die Abluft über die Abluft-Zuführleitung 70 bei geöffnetem Ventil V4 durch den Wärmespeicher 56 zur Zuluftleitung 52 geführt, indem das Ventil V5 geöffnet und das Ventil V6 geschlossen ist. Bei geöffnetem Ventil V2 ist die Zuluft zum Trockentunnel 20 in diesem Fall also ein Gemisch aus Frischluft und Abluft.

Gegebenenfalls kann die Zuluft auch nur durch im Kreis geführte Abluft gebildet sein. Dazu sind dann außerdem die Ventile V2 und V3 geschlossen und das Frischluft-Gebläse 54 ist deaktiviert.

Wie anhand der Figur nachvollzogen werden kann, sind hier verschiedene Mischkonfigurationen der Wärmespeichereinrichtung 74 möglich, um Teilströme der Abluft und/oder der Frischluft zu nutzen und einzusetzen.

Grundsätzlich ist durch eine entsprechende Ansteuerung der Ventile V1 bis V6 dafür Sorge zu tragen, dass die Abluft aus der Abluft aus der Abluftleitung 44 ungehindert abgeführt werden kann.

## Patentansprüche

1. Verfahren zum Temperieren von Gegenständen, insbesondere zum Trocknen von Gegenständen, bei welchem
a) die Gegenstände in einem Temperiertunnel (14) temperiert werden;
b) Tunnelluft aus dem Temperiertunnel (14) über eine Abluftleitung (44) als Abluft abgeführt wird;
c) dem Temperiertunnel (14) über eine Zuluftleitung (52) Zuluft zugeführt wird,
**dadurch gekennzeichnet, dass**
d) eine Wärmespeichereinrichtung (74) mit einem Wärmespeicher (56) verwendet wird, durch welchen in einer Speicherkonfiguration der Wärmespeichereinrichtung (74) Wärme von der Abluft aufgenommen und in einer Abgabekonfiguration Wärme an die Zuluft abgegeben wird.

2. Verfahren nach Anspruch 1, **dadurch gekennzeichnet, dass** die Abluft durch einen Frischluft-Wärmetauscher (46) geleitet wird, wobei die Abluft in dem Frischluft-Wärmetauscher (46) Frischluft erwärmt, die dem Temperiertunnel (14) über die Zuluftleitung (52) zugeführt wird.

3. Verfahren nach Anspruch 1 oder 2, **dadurch gekennzeichnet, dass** die Abluft durch den Frischluft-Wärmetauscher (46) geleitet wird, bevor die Abluft zu dem Wärmespeicher (56) strömt.

4. Verfahren nach einem der Ansprüche 1 bis 3, **dadurch gekennzeichnet, dass** dem Wärmespeicher (56) wahlweise Abluft aus der Abluftleitung (44) und/oder Frischluft aus einer Frischluftquelle (54) zugeführt wird.

5. Verfahren nach einem der Ansprüche 1 bis 4, **dadurch gekennzeichnet, dass** von dem Wärmespeicher (56) kommende Luft wahlweise in die Zuluftleitung (52) geleitet und/oder abgeführt wird.

6. Vorrichtung zum Temperieren von Gegenständen, insbesondere zum Trocknen von Gegenständen, mit
a) einem Temperiertunnel (14);
b) einer Ablufteinrichtung (34, 38, 40), mittels welcher Tunnelluft aus dem Temperiertunnel (14) über eine Abluftleitung (44) als Abluft abführbar ist;
c) einer Zulufteinrichtung (46, 52, 54), mittels welcher dem Temperiertunnel (14) über eine Zuluftleitung (52) Zuluft zuführbar ist;
**gekennzeichnet durch**
d) eine Wärmespeichereinrichtung (74) mit einem Wärmespeicher (56), **durch** welchen in einer Speicherkonfiguration Wärme von der Abluft aufnehmbar und in einer Abgabekonfiguration Wärme an die Zuluft abgebbar ist.

7. Vorrichtung nach Anspruch 6, **dadurch gekennzeichnet, dass** ein Frischluft-Wärmetauscher (46) vorhanden ist, durch welchen Abluft leitbar ist, wobei durch die Abluft in dem Frischluft-Wärmetauscher (46) Frischluft erwärmbar ist, die dem Temperiertunnel (14) über die Zuluftleitung (52) zuführbar ist.

8. Vorrichtung nach Anspruch 7, **dadurch gekennzeichnet, dass** der Frischluft-Wärmetauscher (46) in Strömungsrichtung der Abluft vor dem Wärmespeicher (56) angeordnet ist.

9. Vorrichtung nach einem der Ansprüche 6 bis 8, **dadurch gekennzeichnet, dass** eine Eingangs-Ventilanordnung (V3, V4) vorhanden ist, durch welche eine Speicher-Eingangsleitung (64) des Wärmespeichers (56) wahlweise mit der Abluftleitung (44) und/oder einer Frischluft-Zuführleitung (68) verbindbar ist, die aus einer Frischluftquelle (54) gespeist wird.

10. Vorrichtung nach einem der Ansprüche 6 bis 9, **dadurch gekennzeichnet, dass** eine Ausgangs-Ventilanordnung (V5, V6) vorhanden ist, durch welche eine Speicher-Ausgangsleitung (64) des Wärmespeichers (56) wahlweise mit der Zuluftleitung (52) und/oder einer Abführleitung (48) verbindbar ist, über welche von dem Wärmespeicher (56) kommende Luft abgeführt werden kann.
